# EUROPEAN PATENT SPECIFICATION

(11) **EP 4 292 979 B1**
(45) Date of publication and mention of the grant of the patent: **15.05.2024**
(21) Application number: 22179709.5
(22) Date of filing: 17.06.2022
(51) Int. Cl.: C01B 3/34

(54) **HYDROGEN PRODUCTION SYSTEM**
WASSERSTOFFERZEUGUNGSSYSTEM
SYSTÈME DE PRODUCTION D'HYDROGÈNE

(43) Date of publication of application: 20.12.2023
(73) Proprietor: ZEG Power AS, 1325 Lysaker (NO)
(72) Inventor: NORHEIM, Arnstein, N-3614 KONGSBERG (NO); STENRØD WEST, Margrethe, N-1368 STABEKK (NO); GRAFF, Vidar, N-1364 FORNEBU (NO)
(74) Representative: Onsagers AS

(56) References cited:
- US-A1- 2022 136 700
- US-B2- 10 227 234
- US-B2- 11 084 720
- YAN YONGLIANG ET AL: "Techno-economic analysis of low-carbon hydrogen production by sorption enhanced steam methane reforming (SE-SMR) processes", ENERGY CONVERSION AND MANAGEMENT, ELSEVIER SCIENCE PUBLISHERS, OXFORD, GB, vol. 226, 30 October 2020 (2020-10-30), XP086387272, ISSN: 0196-8904, DOI: 10.1016/J.ENCONMAN.2020.113530 [retrieved on 2020-10-30]

## Description

### FIELD OF THE INVENTION

The present invention relates to a system for producing hydrogen gas comprising a reformer reactor, a regenerator reactor, a regenerator transport line and a recycling line. The regenerator reactor includes a regenerator power source system having a gas burner releasing exhaust off-gas, a heat exchanger and a return line.

### BACKGROUND AND PRIOR ART

Due to a rapid increase in use of hydrogen fuel as energy carrier, supply of hydrogen to industrial users has become a major business around the world.

Hydrogen can be extracted from fossil fuels and biomass, from water, or from a mix of both. Natural gas is currently the primary source of hydrogen production.

Today, hydrogen fuel is produced through a variety of methods. The most common methods are natural gas / methane reforming, coal gasification and electrolysis. Other methods include solar-driven and biological processes.

### See e.g. https://www.energy.gov/eere/fuelcells/hydrogen-fuel-basics

### Conventional SMR

In conventional steam methane reforming (*SMR*)*,* a gas mixture consisting of hydrogen (*H₂*) and carbon monoxide (*CO*) is created when steam reacts with methane in the presence of a catalyst at high temperatures (800 - 1000 °*C*) and high pressure (15 - 20 bar) (reaction 2.1 below). Carbon dioxide (*CO₂*) and additional hydrogen are subsequently produced at a lower temperature (300 - 400 °C) environment by a water-gas shift reaction (reaction 2.2 below) which involves reacting the carbon monoxide with steam using a catalyst. The hydrogen gas is then separated from *CO₂* by for example pressure-swing adsorption (*PSA*) in several steps until the desired hydrogen purity has been achieved.

The main reactions in conventional *SMR* are as follows:

| | | |
|---|---|---|
| Reforming: | *CH₄* (g) + *H₂O* (g) ↔ *CO* (g) + *3H₂* (g) | (2.1) |
| Shift: | *CO* (g) + *H₂O* (g) ↔ *CO₂* (g) + *H₂* (g) | (2.2) |
| Overall: | *CH₄* (g) + *2H₂O* (g) ↔ *CO₂* (g)+ *4H₂* (g) | (2.3) |

Conventional *SMR* suffers from several disadvantages such as need of large fixed beds to minimize pressure drops, deactivation of catalysts due to carbon formation and need of maintaining high reactor temperatures since only a part of the combustion heat is used directly into the process.

### Sorption-enhanced SMR (SE-SMR)

The *SE-SMR* process reduces processing steps by adding a *CO₂*-sorbent such as calcium oxide (*CaO*) or dolomite to the reformer reactor. With the sorbent present, the *CO₂* is converted to solid carbonate (*CaCO₃*) in an exothermic calcination process (reaction 2.4 below), resulting in a product gas from the reformer consisting mainly of *H₂* and *H₂O,* with minor amounts of *CO, CO₂* and unconverted *CH₄* (fuel gas). Adding the sorbent thus results in a forward shift of reactions 2.1 - 2.3 and thus improves methane conversion and hydrogen yield. The exothermic reaction leads to a near autothermal process operating in temperatures ranging from 550 to 650°C.

The main reaction in *SE-SMR* is, in addition to reactions 2.1 - 2.2, as follows:

| | | |
|---|---|---|
| Carbonation: | *CaO* (s) + *CO₂* (g) ↔ *CaCO₃* (s) | (2.4) |
| Overall: | *CH₄* (g) + *2H₂O* (g) + *CaO* (s) ↔ *CaCO₃* (s) + *4H₂* (g) | (2.5) |

In continuous production, the carbonated sorbent, saturated by *CO₂,* is subsequently transported to a regenerator reactor where it is exposed to high temperature for ensuring that an endothermic calcination reaction 2.6 takes place.

Calcination / Regeneration:

*CaCO₃* (s) ↔ *CaO* (s) + *CO₂* (g) (2.6)

Depending on the configuration of the reactor, the saturated sorbent is heated to around 900°C to allow the endothermic reaction to proceed, i.e. releasing the *CO₂* from the carbonated limestone, *CaCO₃.*

Hence, heat delivered to the regenerator reactor must both raise the temperature of the saturated sorbent entering the bed and provide excess heat sufficient for the calcination reaction to be carried out. The heat source may for example be waste heat from a solid oxide fuel cell (*SOFC*). Sorbent saturated by *CO₂* is typically called 'used sorbent'.

The resulting regenerated sorbent (*CaO*) is subsequently transported back to the reformer reactor, and the *CO₂* released from the used sorbent is transported to an external location, typically a *CO₂* handling or storage facility.

The above *SE-SMR* may be carried out in both fixed and fluidized bed reactors. However, the use of fluidized bed reactors is considered advantageous due to their high acceptance of continuous feeding and withdrawal of fluids / particulates (thus allowing higher degree of continuous operation), their efficient and near isothermal heat distribution, their efficient mixing of chemical reactants, their higher suitability for large scale operation, their lower pressure drops and their higher heat transfer between the bed and immersed bodies.

The fluidizing medium for *SE-SMR* regenerator may in principle be any gas that can be easily separated from *CO₂.* Steam is considered ideal in this respect since steam condenses at a significantly higher temperature than *CO₂.* The fluidizing medium for *SE-SMR* reformer is typically a mixture of steam and hydrocarbon gas, with a steam-to-carbon ratio *S*/*C* of 2.5/1 to 4/1.

*SE-SMR* is known in the field. See for example patent publication US 11,084,720 B2 disclosing a method for producing power from hydrogen gas produced via sorption enhanced reforming. In this prior art system, the sorbent material *CaO* within the reformer reactor acts to adsorb *CO₂* to form a used sorbent in form of *CaCO₃.* The used sorbent is further guided into a regenerator reactor wherein the used sorbent can be indirectly heated via a heater to a temperature of 850-900° C. Examples of heaters can be use of pressure swing absorption (PSA) off-gases and/or use of natural gas fuel and an oxidizer, e.g. air. During heating the sorbent is regenerated due to desorption of CO₂. Patent publications US 8,241,374 B2, WO 2018/162675 A3, WO 2016/191678 A1 and US 2019/0112188 A1 describes other examples of sorption enhanced SMR. A sorption enhanced steam methane reforming process is also known from "Techno-economic analysis of low-carbon hydrogen production by sorption enhanced steam methane reforming (SE-SMR) processes", ENERGY CONVERSION AND MANAGEMENT, ELSEVIER SCIENCE PUBLISHERS, OXFORD, GB, vol. 226, 30 October 2020.

None of the systems described in the above-mentioned patent publications provide information concerning improving the efficiency of the heating system for heating the used sorbent within the regenerator reactor.

At least one objective of the present invention is therefore to improve the efficiency of the heating system for heating the used sorbent within the regenerator.

### SUMMARY OF THE INVENTION

The present invention is set forth and characterized in the independent claims, while the dependent claims describe other characteristics of the invention.

In a first aspect, the invention concerns a system for producing hydrogen gas *H₂.*

The system comprises at least one reformer reactor, at least one regenerator reactor, at least one regenerator transport line and at least one recycling line.

The reformer reactor(s) has/have an enclosed volume for containing a carbon dioxide capturing sorbent *A* forming a used sorbent *A** when conditions for capturing carbon dioxide such as minimum pressure and/or minimum temperature and/or minimum amount per volume unit are present. The reformer reactor is configured to allow reforming of a feed material B (such as a hydrocarbon fuel) and a steam C (i.e. water predominantly in gas phase) to produce a reformate gas mixture comprising hydrogen gas *H₂* and carbon dioxide *CO₂.* The reformer reactor comprises at least one reformer inlet for feeding at least one of the feed material *B* and the steam *C* into the reformer reactor and at least one reformer outlet for discharging the used sorbent *A** and the hydrogen gas *H₂.* More preferably the reformer reactor comprises at least two reformer inlets including a feed material inlet and a steam inlet. The reformer reactor(s) may comprise an additional inlet for feeding the carbon dioxide capturing sorbent A into the reformer reactor.

A specific example of a carbon dioxide capturing sorbent *A* and a used sorbent *A** is calcium oxide *CaO* and calcium carbonate *CaCO₃,* respectively.

The regenerator reactor(s) comprise(s) a regenerator vessel, at least one regenerator inlet for receiving at least a portion of the used sorbent *A**, at least one regenerator power source system configured to provide energy to the received used sorbent *A** for allowing release of carbon dioxide *CO₂,* thereby regenerating the sorbent *A,* and at least one regenerator outlet for discharging the regenerated sorbent *A.*

The regenerator power source system(s) may comprise one or more gas burners ejecting an exhaust off-gas G, wherein the gas burner(s) comprise(s) at least one first burner inlet for feeding a first burner gas *E* into the gas burner, at least one burner outlet for ejecting an exhaust off-gas *G* produced inside the gas burner.

If the gas burner(s) is/are arranged outside the regenerator vessel, the gas burner(s) also comprise at least one burner transport line for transporting the exhaust off-gas *G* from the burner outlet(s) to an internal volume of the regenerator reactor vessel.

The regenerator power source system(s) may also comprise at least one return line for transporting at least a portion of the cooled exhaust off-gas *G* from the internal volume of the regenerator reactor vessel into the gas burner(s) and/or the burner transport line(s).

The first burner gas *E* is preferably an oxygen containing gas / gas mixture such as oxygen gas *O₂* and/or air.

In an exemplary configuration, the regenerator power source system further comprises a heat exchanger configured to transfer heat from the exhaust off-gas *G* to the internal volume of the regenerator vessel and wherein the return line is configured to transport the portion of the cooled exhaust off-gas G flowing downstream the heat exchanger.

In another exemplary configuration, the gas burner comprises at least one second burner inlet for feeding / letting in a second burner gas *F* different from the first gas *E,* for example natural gas and/or hydrogen gas, into the burner.

At least one of the first burner gas E and the second burner gas F is combustible.

The exhaust off-gas *G* produced inside the gas burner may be a result of reactions between the first and second gasses *E,F.*

The temperature of the exhaust off-gas *G* is typically much higher than the temperature of the first gas *E* and (if present) the second gas *F.* For example, the first and second gases *E,F* may have a temperature in the range 5-25°C, while the exhaust gas *G* may have a temperature in the range 1000-1200°C.

The transport of at least a portion of the regenerated sorbent *A* from the regenerator outlet(s) into the reformer reactor(s) may be fed into the one or more reformer inlets or via one or more dedicated recycling inlets.

In yet another exemplary configuration, the system further comprises an automatic controller in signal communication with the regenerator power source via a power source communication line.

The controller may be configured to automatically control operation of the regenerator power system based one or more of the following parameters:
- a flow rate of the first burner gas *E* into the burner,
- if applicable, a flow rate of the second burner gas *F* into the burner,
- a flow rate of the feed material *B* flowing into the reformer reactor,
- a flow rate of steam *C* flowing into the reformer reactor,
- a flow rate of a mixture of feed material *B* and steam *C* flowing into the reformer reactor,
- a flow rate of fluid comprising used sorbent *A** and *CO₂* flowing into the regenerator vessel,
- if applicable, a flow rate of hydrogen gas flowing out of the separator,
- a temperature within the regenerator vessel,
- a temperature of the exhaust off-gas *G* flowing into the regenerator vessel and/or out of the regenerator vessel, for example upstream and/or downstream a heat exchanger, and
- a flow rate of the exhaust off-gas *G* into the regenerator vessel and/or out of the regenerator vessel, for example upstream and/or downstream a heat exchanger.

In yet another exemplary configuration, the return line comprises an exhaust off-gas control valve configured to regulate a flow rate *R_{G}* of the exhaust off-gas *G* flowing in the return line. The exhaust off-gas control valve may comprise a control valve controller configured to control the flow rate *R_{G}* of the exhaust off-gas *G.*

In yet another exemplary configuration, the return line comprises a flow sensor configured to measure the flow rate *R_{G}* of the exhaust off-gas *G* flowing in the return line.

In yet another exemplary configuration, the system further comprises an automatic controller in signal communication with the flow sensor via a flow controller communication line. The controller may be configured to automatically control the exhaust off-gas control valve based on the flow rate *R_{G}* measured by the flow sensor via a control valve communication line.

In yet another exemplary configuration, any heat exchanger is configured such that a heat exchanger exit temperature *Tₕₑ* of the exhaust off-gas *G* leaving the heat exchanger is less than 90 % of a heat exchanger inlet temperature *Tₕᵢ* entering the heat exchanger, more preferably less than 85 %, for example 82 %.

In yet another exemplary configuration, the system further comprises a second return line for transporting a portion of the cooled exhaust off-gas *G* from the internal volume of the regenerator reactor vessel, for example from a heat exchanger, to an off-gas treatment system located outside the regenerator vessel. The off-gas treatment system is typically a *CO₂* treatment system.

In yet another exemplary configuration, the system further comprises a second fuel material line for transporting a portion of the feed material *B* such as natural gas or biogas going into the reformer also into the gas burner. Such a second fuel material line may be in fluid communication with the second burner inlet.

Hence, the gas entering into the burner (in addition to combustible gas such as oxygen / air) can be a mix of the feed material *B* and another gas *F* or feed material *B* only.

In yet another exemplary configuration, the system further comprises a hydrogen purifier configured to produce pure *H*₂, for example a Pressure Swing Adsorption (PSA) Hydrogen Purifier, and a hydrogen transport line for transporting hydrogen containing gas produced in the reformer reactor into the hydrogen purifier, typically via a separator configured to separate used sorbent *A** and hydrogen *H₂*.

In yet another exemplary configuration, the system further comprises a hydrogen purifier transport line for transporting off-gases produced within the hydrogen purifier into the gas burner, for example via the second burner inlet(s). The gas entering the burner (in addition to combustible gas such as oxygen / air) can be a mix of the off gases, the feed material *B* and another gas *F.*

In yet another exemplary configuration, the gas burner is configured such that, when gas entering the gas burner have a temperature of less than 100°C, preferably less than 50°C, even more preferably less than 25°C, for example 10°C, the temperature of the exhaust off-gas *G* ejected from the burner outlet is more than 900°C, preferably more than 1000°C, even more preferably more than 1050°C, for example 1 100°C.

In yet another exemplary configuration, the reformer reactor and/or the regenerator reactor includes a fluidized bed.

In yet another exemplary configuration, the reformer reactor is selected from the group consisting of:
*i*) a reformer reactor (100) configured to support sorption enhanced steam methane reforming,
*ii*) a reformer reactor (100) configured to support sorption enhanced water gas shift, or
*iii*) a combination of i) and ii).

In yet another exemplary configuration, the system comprises a separator configured to separate the used sorbent *A** from the hydrogen gas *H₂* ejected from the reformer reactor. The separator comprises a separator inlet for feeding the hydrogen gas *H₂* and the used sorbent *A** into the separator and a separator outlet for ejecting the separated used sorbent *A**. In this exemplary configuration, the system may further comprise a separator transport line for transporting the used sorbent *A** and the hydrogen gas *H₂* from the reformer outlet to the separator inlet, a regenerator transport line for transporting the flow of the used sorbent *A** from the separator outlet to the regenerator inlet and a hydrogen transport line for transporting the separated hydrogen to the hydrogen purifier.

In a second aspect, the invention concerns a method for producing hydrogen gas *H₂* using the system as described above.

The method comprising the steps of:
A. introducing the feed material *B* (such as hydrocarbon fuel) and the steam *C* into the reformer reactor via the one or more reformer inlets, wherein the reformer reactor is containing carbon dioxide capturing sorbent *A* (such as calcium oxide *CaO)* and preferably also a catalyst for catalyzing the reforming reactions,
B. reforming the feed material *B* and the steam *C* within the reformer reactor for producing the reformate gas mixture and the used sorbent *A** (such as calcium carbonate *CaCO3),*
C. transporting at least a portion of the used sorbent *A** and at least a portion of the reformate gas mixture from the reformer reactor to the regenerator reactor through transport lines,
D. introducing the first burner gas *E,* and preferably also a second burner gas *F,* into the gas burner(s) at a burner inlet temperature *T_{bi},* wherein the gas burner is configured to allow the first burner gas *E,* with any second burner gas *F,* to produce an exhaust off-gas *G* at a burner outlet temperature *T_{bo}* higher than the burner inlet temperature *T_{bj},*
E. transporting the exhaust off-gas *G* from the gas burner(s) to the internal volume of the regenerator reactor vessel (201), for example to the heat exchanger arranged within the internal volume for heat transfer from the exhaust off-gas *G,* wherein the gas burner(s) is/are configured such that the heat causes the used sorbent *A** within the regenerator vessel to release at least a portion of the carbon dioxide *CO₂* for at least partly regenerating the carbon dioxide capturing sorbent *A* of step A,
G. transporting at least a portion *R_{G}* of the flow of the exhaust gases *G* leaving the internal volume of the regenerator reactor vessel, for example from a heat exchanger outlet, to the gas burner(s) to cool the exhaust off-gas *G* from the burner outlet temperature *T_{bo}* to a regenerator inlet temperature *Tₕᵢ* and
H. transporting the carbon dioxide capturing sorbent *A* regenerated at step F from the regenerator reactor to the reformer reactor via any recycling line.

The regenerator inlet temperature *Tₕᵢ* should be sufficient to heat the used sorbent *A** such that carbon dioxide *CO₂* is released.

The burner outlet temperature *T_{bo}* is preferably at least 50 times higher than the burner inlet temperature *T_{bj}.*

The method may further comprise at least one of the following steps:
- introducing the feed material *B* being fed into the reformer reactor also into the gas burner via a second fuel material line,
- transporting hydrogen containing gas produced in the reformer reactor into at least one hydrogen purifier such as a pressure swing adsorption (PSA) hydrogen purifier via one or more hydrogen transport lines,
- introducing off-gases produced within the at least one hydrogen purifier into the gas burner via a hydrogen purifier transport line,
- transporting the used sorbent *A** and the reformate gas mixture from the reformer reactor to at least one separator configured to separate the used sorbent *A** from the hydrogen gas *H₂* via a separator transport line,
- separating the used sorbent *A* * from the hydrogen gas *H₂* by use of the at least one separator,
- transporting the separated hydrogen gas *H₂* into at least one hydrogen purifier via a hydrogen transport line,
- introducing off-gasses produced within the at least one hydrogen purifier into the gas burner via one or more hydrogen purifier transport lines,
- in step C, transporting the separated used sorbent *A** from the separator to the regenerator reactor via at least one regenerator transport line comprising a regulating device configured to allow user operated adjustment of a flow rate *R*_{*A**} of the used sorbent *A** and
- monitoring a flow rate *R*_{*A**} of the used sorbent *A** flowing into the regenerator inlet and, if the variation in the flow rate *R*_{*A**} exceeds a predetermined flow rate threshold, regulating a flow rate of the exhaust off-gas *G* flowing upstream and/or downstream the heat-exchanger by use of an automatic controller in signal communication with the regenerator power source to ensure that the burner outlet temperature *T_{bo}* is maintained within a predetermined temperature threshold during operation.

The transport of hydrogen containing gas into the hydrogen purifier(s) is typically performed after separating out the used sorbent *A** in the separator.

The gas entering into the burner(s) can, in addition to the combustible gas such as oxygen / air, be a mix of the off gases, the feed material *B* and another gas *F.*

### BRIEF DESCRIPTION OF THE DRAWINGS

Following drawings are appended to facilitate the understanding of the invention. The drawings show embodiments of the invention, which will now be described by way of example only, where:
figure 1 shows a system for producing hydrogen gas using a regenerator power source system and an automatic controller in accordance with a first embodiment of the invention,
figure 2 shows further details of the regenerator power system and the automatic controller of the system in figure 1,
figure 3 shows a system for producing hydrogen gas using a regenerator power source system and an automatic controller in accordance with a second embodiment of the invention,
figure 4 shows a system for producing hydrogen gas using a regenerator power source system and an automatic controller in accordance with a third embodiment of the invention and
figure 5 shows the system of fig. 4 where typical chemical reactions, flows and temperatures are indicated.

### DETAILED DESCRIPTION OF THE INVENTION

In the following, embodiments of the invention will be discussed in more detail with reference to the appended drawings. It should be understood, however, that the drawings are not intended to limit the invention to the subject-matter depicted in the drawings.

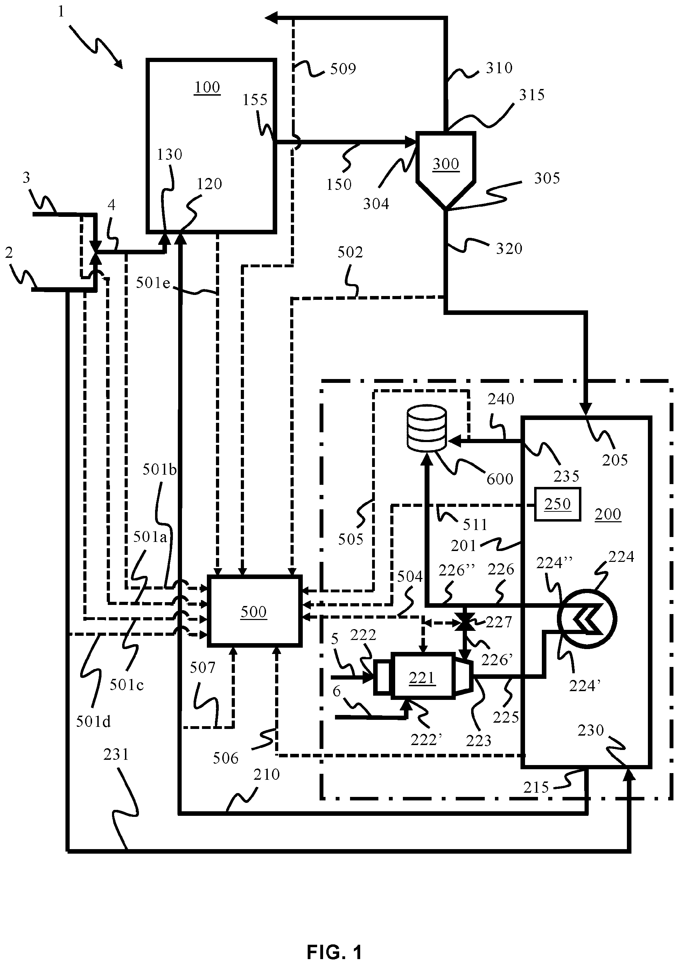

With reference to figures 1-5, an exemplary system 1 for producing hydrogen gas comprises the following main components:
- a reformer reactor 100 containing calcium oxide (*CaO*) as a *CO₂* capturing sorbent *A,* into which sorbent *A* feed gas (for example a natural gas and/or a biogas) *B* and steam *C* is reformed in an exothermic calcination process to a reformate gas mixture containing hydrogen gas *H₂* and a used sorbent *A** in form of solid calcium carbonate (*CaCO₃*),
- a regenerator reactor 200 having a regenerator vessel 201 and a burner system 220,
- a regenerator transport line 150,320 for transporting the calcium carbonate (*CaCO₃*) of the reformate gas mixture into the regenerator vessel 201 and
- a recycling line 210 for transporting the regenerated calcium oxide (*CaO*) into the reformer reactor 100.

Initially the steam C and the feed gas *B* are transported to the reformer reactor 100 through a dedicated steam inlet line 2 and a dedicated fuel material inlet line 3, respectively. Prior to being fed into the inner volume of the reformer reactor 100 via a reformer inlet 130, the steam *C* and the feed gas *B* are fed into a common feed line 4, thereby creating a feed mixture *D.* However, feeding the two fluids *B,C* into the reformer reactor 100 via separate inlets may also be envisaged.

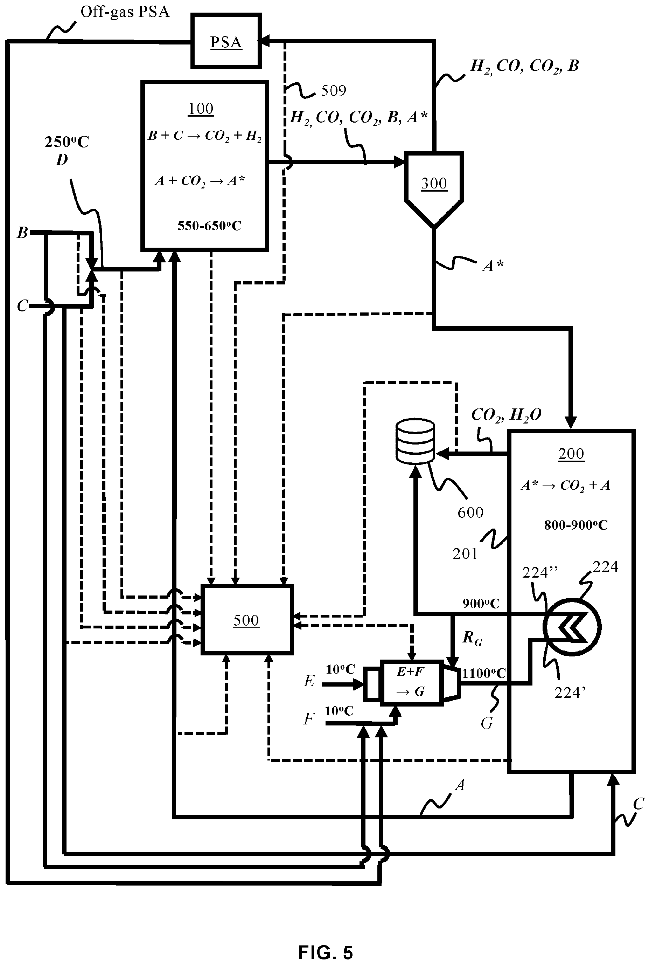

With particular reference to fig. 5, typical temperatures of the feed mixture *D* during operation is 250°C, while typical temperatures within the reformer reactor 100 is between 550°C and 650°C.

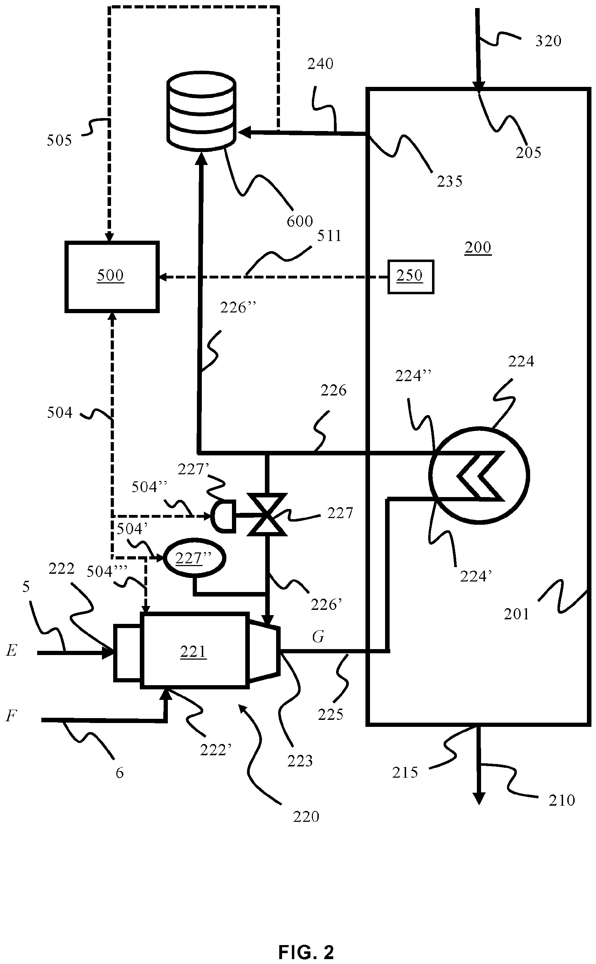

Figure 2 shows the burner system 220 is more detail. The burner system 220 includes in this exemplary configuration a gas burner 221 into which an oxidizing gas *E* such as oxygen gas *O₂* or air is flowing through an oxygen line 5 and a first burner inlet 222 and a flue gas *F* is flowing through a burner feed line 6 and a second burner inlet 222'. The inlet gases *E,F* undergo a combustion into the gas burner 221 and a hot exhaust off-gas *G* of typically *CO₂* and water vapor *H₂O* at a high temperature *T_{bo}* is ejected into a burner transport line 225 via a gas burner outlet 223.

The temperatures of the inlet gases *E,F* are typically in the range 5-25°C (for example 10°C) and the temperature of the exhaust off-gas *G* is typically in the range 1000-1200°C (for example 1100°C).

The exhaust off-gas *G* is further guided through a heat exchanger 224 arranged within the regenerator vessel 201 via a heat exchanger inlet 224' and a heat exchanger outlet 224". In order to regenerate the sorbent *A* (*CaO*), the used sorbent *A** (*CaCO₃*) and any bed material within the regenerator vessel 201 should reach a temperature between 800°C and 900°C, preferably around 850°C. Further, a gas phase *CO₂* partial pressure above 0 bar, for example approximately 0.2 bar, may ensure adequate release of the *CO₂.*

It is undesired to heat the used sorbent *A** (*CaCO₃*) significantly above the required temperature as this could accelerates sorbent degradation by sintering, agglomeration and/or pore closure.

The regenerating sorbent *A* is transported via a sorbent outlet 215 and the recycling line 210 into a sorbent inlet 120 of the reformer reactor 100, thereby achieving sorbent replenishment (see e.g. figure 1).

As further illustrated in figure 2, the cooled exhaust off-gas *G* exiting the heat exchanger 224 via the heat exchanger outlet 224" is guiding out of the regenerator vessel 201 via a return line 226. The cooled exhaust off-gas G typically has a temperature of approximately 900°C.

Outside the regenerator vessel 201, the return line 226 is split into two lines 226', 226"; a burner return line 226' and a reservoir return line 226". The burner guide line 226' guides the cooled exhaust off-gas *G* at a flow rate *R_{G}* to the downstream part of the gas burner 221, for example at or immediately upstream the gas burner outlet 223, and/or directly into the burner transport line 225, thereby cooling the hot exhaust off-gas *G* exiting the gas burner 221. The cooled exhaust off-gas G entering the reservoir return line 226" is guided to a reservoir 600 which typically is a *CO₂* treatment system that also receives gas such as *CO₂* directly from the regenerator vessel 201 via a *CO₂* outlet 235 and a *CO₂* line 240.

Still with reference to figure 2, the flow rate *R_{G}* may be regulated by arranging an exhaust gas control valve 227 in the burner return line 226'. The valve 227 may be regulated by an exhaust gas flow controller 227' receiving instruction signals from a control system 500 via a heat regulation communication line 504. Note that the flow rate *R_{G}* may also be regulated by installing one or more valves 227 in the return line 226 upstream the split and/or in the reservoir return line 226".

A flow sensor 227" may be installed to measure in real-time the flow rate *R_{G}* of the cooled exhaust gas *G.* In figure 2 such a flow sensor 227" is installed in signal and/or fluid communication with the burner return line 226' for direct flow measurements. Further, the heat regulation communication line 504 may be split into a flow valve regulation line 504' for control of the flow sensor 227" and a flow sensor measurement line 504" for receiving flow rate data from the flow sensor 227. The flow sensor regulation line 504' and the flow sensor measurement line 504" may also, or in addition, be configured as separate lines from the control system 500.

Finally, the heat regulation communication line 504 may be split into a burner regulation line 504‴ for transmitting heat related data to the gas burner 221, which again may be used to e.g. regulate the flow of the first gas *E* (such as oxygen or air) and/or the second gas *F* (such as natural gas), thereby controlling the production of hot exhaust gas *G.*

The regulation of the gases *E,F* may alternatively, or in addition, be a result of measured flow rate *R_{G}* from the flow sensor 227‴.

The same burner regulation line 504‴ may be used to transmit signals to the control system 500 with information concerning status of the burner system 220.

The control system 500 may also receive temperature related signals from a temperature sensor 250 via a regenerator temperature measurement line 511, The temperature sensor 250 is configured to measure the temperature conditions within the regenerator vessel 201, for example sorbent temperature and/or any bed temperature. Such temperature measurements, and typically in conjunction with the flow rate measurements by the flow sensor 227", may (via the control system 500 and the respective lines 504, 504",504‴) dictate new settings of the exhaust gas control valve 227 and/or the burner system 220.

Properties such as flow rate, temperature and composition of the gases (typically *CO₂*) sent from the regenerator vessel 201 to the reservoir 600 may be measured by suitable measurement tools and the measurement data may be sent via a *CO₂* measurement line 505 to the control system 500 for further processing. The data may dictate parameter settings of other parts of the hydrogen production system 1, for example the temperature regulation of the burner system 220 as described above and/or the flow rate / composition of the feed mixture *D* into the reformer reactor 100.

The reformate gas mixture ejected from the reformer reactor 100 via a reformer outlet 155 is guided to a separator 300 by a separator transport line 150. The separator 300 may be a cyclone and is configured to at least separate the used sorbent *A** from the hydrogen gas *(H2).* The reformate gas mixture may comprise other fluids than hydrogen gas and used sorbents *A* *, for example carbon monoxide (*CO*) and feed material *B.*

The separator 300 comprises a separator inlet 304 for feeding the reformate gas mixture into the separator 300, a carbonate outlet 305 for ejecting inter alia the separated used sorbent *A** and a hydrogen outlet 315 for ejecting inter alia the separated hydrogen gas.

The separated used sorbent *A** is further transported via a regenerator transport line 320 to a regenerator inlet 205 of the regenerator vessel 201.

Likewise, the separated hydrogen gas (and any other gases such as *CO, CO₂* and feed material *B*) is transported via a hydrogen line 310 to a pressure swing absorption (PSA) unit 700 for further gas purification.

Properties such as flow rates, pressures, temperatures and compositions of both the used sorbent *A** and the separated *H₂* may be measured by suitable measurement tools, and the measurement data may be transmitted to the control system 500 via a used sorbent measurement line 502 and a gas measurement line 509, respectively. Information concerning said properties may be used to regulate other parts of the hydrogen production system 1, for example the temperature regulation of the burner system 220 as described above and/or the flow rate / composition of the feed mixture *D* into the reformer reactor 100.

Measurement data concerning properties such as temperatures, pressures and compositions from within the regenerator vessel 201 may also be sent directly to the control system 500 via a heat measurement line 506.

The control system 500 may also receive said properties from the recycling line 210 via a regenerate sorbent measurement line 507.

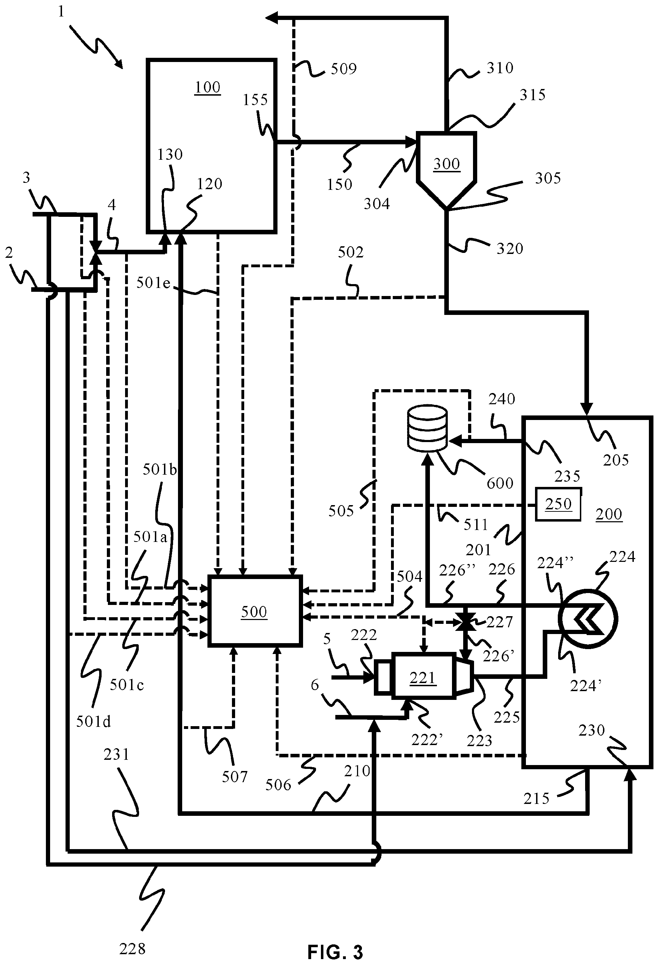

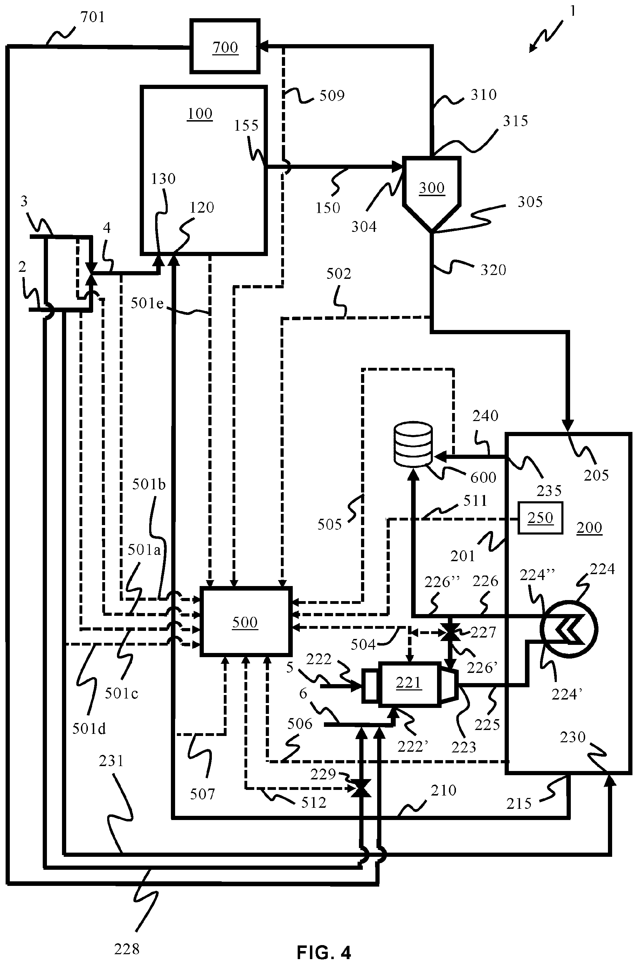

With particular reference to figures 3 and 4, the flue gas *F* flowing through the burner feed line 6 may originate fully or partly from the feed material *B* flowing into the reformer reactor 100 by arranging a second fuel material line 228 in fluid communication between the fuel material inlet line 3 and the burner feed line 6. To control this flow of feed material *B* into the gas burner 221, a fuel material control valve 229 may be installed in the second fuel material line 228. Further, automatic control of the fuel material control valve 229 may be achieved by installing a fuel control line 512 between the control system 500 and the valve 229, thereby ensuring signal communication therethrough.

As seen in figure 4, another source of flue gas *F* may be provided by arranging one or more hydrogen purifier off-gas line 701 between the PSA-unit 700 and the burner feed line 6. As for the feed material *B,* the flow of the off-gas / tail-gas from the PSA-unit 700 may be controlled by a dedicated control valve (not shown).

Similar to the second fuel material line 228, a steam regenerator line 231 may be installed in fluid communication between the steam inlet line 2 and a steam inlet 230 into the regenerator vessel 201 to allow steam to the latter.

The control system 500 may also receive measurement data providing information of properties in any other parts of the hydrogen production system 1. As shown in figures 3 and 4, the system 1 may further comprise
- a feed inlet measurement line 501a ensuring signal communication between the fuel material inlet line 3 and the control system 500,
- a fuel material measurement line 501b ensuring signal communication between the feed line 4 and the control system 500,
- a steam measurement line 501c ensuring signal communication between the steam inlet line 2 and the control system 500,
- another steam measurement line 501d ensuring signal communication between the steam regenerator line 231 and the control system 500,
- a reformer measurement line 501e ensuring signal communication between the reformer reactor 100 and the control system 500.

The reformer measurement line 501e may for example transmit signals to the control system 500 carrying information concerning at least one of pressure, temperature and composition.

Signal communication lines from the separator transport line 150 and/or the hydrogen purifier off-gas line 701 to the control system 500 may also be envisaged.

In the following, a specific example of operation will be described to ensure sufficient energy transport from the above mentioned burner system 220 to the heat exchanger 224 to achieve a temperature within the regenerator vessel 201 allowing efficient release of *CO₂* from the *CaCO₃* (used sorbent, *A**) to regenerate the *CaO* (sorbent *A*).

The heat exchanger 224 may be an in-bed tube bundle heat exchanger and the regenerator 200 may include a fluidized bed.

From modelling studies and based on the learnings from a prototype plant, the ideal gas temperature at the heat exchanger bundle inlet 224' is around 1100 °C, dropping to around 900 °C at the bundle outlet 224".

At a design solids circulation rate, a desired heat input may be around 10 kW/kg H₂/h production capacity (~350 kW for a 30 kg H₂/h production capacity). When the solids circulation rate increases or decreases, the heat input of the exhaust gas *G* running through the burner transport line 225 to the regenerator 200 may be automatically adjusted accordingly using the above described system.

An efficient input parameter for such automatic regulation is the regenerator bed temperature. Due to the intense mixing in the fluidised bed, the bed temperature responds quickly to variations in solids circulation rate *R*_{*A**}.

A change in bed temperature thus results in a rapid response in heat supply from the burner system 220, while maintaining the correct gas temperature at the heat exchanger bundle inlet 224'. The heat supply from the burner system 220 is a direct function of the rate of fuel combustion in the inner volume of the gas burner 221, and is regulated by the fuel addition from the oxygen line 5 and the burner feed line 6, which again is controlled by fuel flow regulation, for example by automatic adjustment of the flow through the fuel material control valve 229.

The gas burner 221 may be set up to prioritize the PSA tail-gas running from the PSA-unit 700 through the PSA tail-gas line 701, and add fresh natural gas through the burner feed line 6 when this is not sufficient. The main fuel flow regulation is therefore achieved by controlling the natural gas flow by control valves in one or more of the burner feed line 6, the second fuel material line 228 and the PSA tail-gas line 701.

When variations in for example the solids circulation rate *R*_{*A**} in the regenerator transport line 320 and/or the bed temperature in the regenerator vessel 201 are detected, the control system 500 regulates the fresh natural gas flow into the burner 221, thereby controlling the heat input to the regenerator 220.

The oxidant for the burner system 220 is typically oxygen rich/nitrogen depleted, produced by a second PSA, a VPSA or cryogenic separation. The oxidant flow is regulated by the total fuel flow, thereby allowing excess oxygen in the combustion chamber for complete oxidation of all combustible gas compounds.

The combustion temperature in an oxy-fuel burner is-generally very high compared to air fed burners (2000-2500 °C) and thus well beyond the limit of the heat exchanger bundle material of construction. Therefore, and to improve the efficiency of the overall burner system, a flue gas recirculation system has been developed. The recirculation system conveys the major part (~90 %-v) of the flue gas exiting the regenerator 200 in-bed heat exchanger back to the burner combustion chamber thus 1) increasing the gas flow to the heat exchanger and 2) lowering the gas flow temperature to the desired level. To overcome the pressure loss, high temperature fan(s) may be installed at the flue gas line between the heat exchanger outlet 224" and the burner return pipe 226',226'.

The flow split between the recycle back to the burner and the flow to downstream system may be controlled by the back-pressure in the downstream system.

In the preceding description, various aspects of the system according to the invention have been described with reference to the illustrative embodiment. For purposes of explanation, specific numbers, systems and configurations were set forth in order to provide a thorough understanding of the system and its workings. However, this description is not intended to be construed in a limiting sense.

### List of reference numbers

- 1: Hydrogen production system
- 2: Steam inlet line
- 3: Fuel material inlet line
- 4: Feed line
- 5: First burner inlet line / oxygen line
- 6: Second burner inlet line / burner feed line
- 100: Reformer reactor
- 120: Sorbent inlet
- 130: Reformer inlet for mixture *D* of feed material *B* and steam *C*
- 150: Separator transport line
- 155: Reformer outlet
- 200: Regenerator reactor
- 201: Regenerator vessel
- 205: Regenerator inlet
- 210: Recycling line
- 215: Regenerator outlet / sorbent outlet
- 220: Regenerator power system / regenerator heat system / burner system
- 221: Gas burner
- 222: First gas burner inlet / first burner inlet
- 222': Second gas burner inlet / second burner inlet
- 223: Gas burner outlet
- 224: Heat exchanger
- 224': Heat exchanger inlet
- 224": Heat exchanger outlet
- 225: Burner transport line
- 226: Return line
- 226': Burner return line
- 226": *CO₂* return line
- 227: Exhaust gas control valve
- 227': Exhaust gas flow controller
- 227": Flow sensor
- 228: Second fuel material line
- 229: Fuel material control valve
- 230: Steam inlet
- 231: Steam regenerator line
- 235: *CO₂* outlet
- 240: *CO₂* line
- 250: Temperature sensor for measuring bed temperature
- 300: Separator
- 304: Separator inlet
- 305: Used sorbent outlet / carbonate outlet
- 310: Hydrogen line
- 315: Hydrogen outlet
- 320: Regenerator transport line
- 400: Dosing system
- 405: Tank inlet
- 410: Tank
- 411: Tank measurement device
- 415: Tank outlet
- 430: Second regenerator transport line (upstream 440)
- 430: Second regenerator transport line (downstream 440)
- 440: Flow regulating device
- 450: Screw conveyor
- 460: Motor / electric motor
- 470: Variable speed drive / frequency regulator
- 500: Control system / automatic controller
- 501a: Feed inlet measurement line
- 501b: Fuel material measurement line
- 501c: Steam measurement line (reformer reactor)
- 501d: Steam measurement line (regenerator reactor)
- SOle: Reformer measurement line
- 502: Used sorbent measurement line
- 503: Flow regulation measurement line
- 504: Heat regulation communication line
- 504': Flow sensor regulation line
- 504": Flow sensor measurement line
- 504‴: Burner regulation line
- 505: *CO₂* measurement line
- 506: Heat measurement line
- 507: Regenerate sorbent measurement line
- 508: Tank measurement line
- 509: Gas measurement line
- 510: Cooling system
- 511: Regenerator temperature measurement line
- 512: Fuel control line
- 600: *CO₂* storage / reservoir / *CO₂* treatment system
- 700: Hydrogen purifier / Pressure swing absorption (PSA) unit
- 701: Hydrogen purifier off-gas line / PSA tail-gas line
- *A*: Sorbent, CaO
- *A* *: Used sorbent, CaCO₃
- *B*: Feed material / natural gas
- C: Steam
- *D*: Feed mixture
- *E*: First gas / oxygen
- *F*: Second gas / natural gas / PSA off-gases / natural gas and PSA off-gases
- *G*: Exhaust gas from the gas burner
- *H*: Off-gases from hydrogen purifier
- *R*_{*A**}: Flow rate of used sorbent
- *R*_{*A**,*H*}: Higher flow rate of used sorbent
- *R*_{*A***,L*}: Lower flow rate of used sorbent
- *R_{G}*: Flow rate of exhaust off-gas
- *vᵣ*: Rotation speed of screw conveyor
- *v_{r,H}*: Higher rotation speed of screw conveyor
- *v_{r,L}*: Lower rotation speed of screw conveyor
- *Q*: Heat
- *T_{bi}*: Temperature of inlet gases *E,F*
- *T_{bo}*: Burner outlet temperature exhaust off-gas *G* / maximum temperature of exhaust gas *G*
- *Tₕᵢ*: Regenerator inlet temperature / heat exchanger inlet temperature

## Claims

1. A system (1) for producing hydrogen gas, the system (1) comprising:
- a reformer reactor (100) for containing a carbon dioxide capturing sorbent (*A*),
∘ wherein the reformer reactor (100) is configured to allow reforming of a feed material (*B*) and a steam (*C*) to produce a reformate gas mixture comprising a hydrogen gas (*H₂*) and a carbon dioxide gas (*CO₂*),
∘ wherein the reformer reactor (100) comprises a reformer inlet (130) for feeding at least one of the feed material (*B*) and the steam (*C*) into the reformer reactor (100) and a reformer outlet (155) for ejecting the hydrogen gas (*H₂*) and a used sorbent (*A**) produced within the reformer reactor (100), the used sorbent (*A**) being defined as a the product resulting from reaction between the sorbent (*A*) and the carbon dioxide (*CO₂*),
- a regenerator reactor (200) comprising
∘ a regenerator vessel (201),
∘ a regenerator inlet (205) for receiving at least a portion of the used sorbent (*A**),
∘ a regenerator power source system (220) configured to provide sufficient heat to the received used sorbent (*A**) to allow release of carbon dioxide (*CO₂*) from the used sorbent (*A**) and to regenerate the carbon dioxide capturing sorbent (*A*), and
∘ a regenerator outlet (215) for ejecting the regenerated sorbent (*A*),
- a regenerator transport line (150,320) for transporting the used sorbent (*A**) from the reformer outlet (155) to the regenerator inlet (205) and
- a recycling line (210) for transporting at least a portion of the regenerated sorbent (*A*) from the regenerator outlet (215) into the reformer reactor (100), wherein the regenerator power source system (220) comprises
- a gas burner (221) comprising
∘ a first burner inlet (222) for feeding a first burner gas (E) into the burner (221),
∘ a burner outlet (223) for ejecting an exhaust off-gas (*G*) produced inside the gas burner (221) and
∘ a burner transport line (225) for transporting the exhaust off-gas (*G*) from the burner outlet (223) to an internal volume of the regenerator reactor vessel (201), and
- a return line (226,226') for transporting at least a portion of the cooled exhaust off-gas (*G*) from the internal volume of the regenerator reactor vessel (201) into at least one of the gas burner (221) and the burner transport line (225).

2. The system (1) according to claim 1, wherein the regenerator power source system (220) further comprises
- a heat exchanger (224) configured to transfer heat from the exhaust off-gas (*G*) to the internal volume of the regenerator vessel (201) and
- wherein the return line (226,226') is configured to transport the portion of the cooled exhaust off-gas (G) from the heat exchanger (224).

3. The system (1) according to claim 1 or 2, wherein the gas burner (221) further comprises
- a second burner inlet (222') for feeding a second burner gas (*F*) into the burner (221).

4. The system (1) according to any one of the preceding claims, wherein the system (1) further comprises an automatic controller (500) in signal communication with the regenerator power source (220), the controller (500) being configured to automatically control operation of the regenerator power system (220) based on at least one of
- a flow rate of the first burner gas (*E*) into the burner (221),
- a flow rate of the feed material (*B*) flowing into the reformer reactor (100),
- a flow rate of steam (*C*) flowing into the reformer reactor (100),
- a flow rate of a mixture of feed material (*B*) and steam (*C*) flowing into the reformer reactor (100),
- a flow rate of the used sorbent (*A**) flowing into the regenerator vessel (201),
- a temperature within the regenerator vessel (201),
- a temperature of the exhaust off-gas (*G*) flowing into the regenerator vessel (201) and/or out of the regenerator vessel (201) and
- a flow rate of the exhaust off-gas (*G*) into the regenerator vessel (201) and/or out of the regenerator vessel (201).

5. The system (1) according to any one of the preceding claims, wherein the return line (226') comprises
- an exhaust off-gas control valve (227) configured to regulate a flow rate (*R_{G}*) of the exhaust off-gas (*G*) flowing in the return line (226').

6. The system (1) according to claim 5, wherein the exhaust off-gas control valve (227) comprises
- a control valve controller (227') configured to control the flow rate (*R_{G}*) of the exhaust off-gas (*G*).

7. The system (1) according to any one of the preceding claims, wherein the return line (226') comprises
- a flow sensor (227") configured to measure a flow rate (*R_{G}*) of the exhaust off-gas (*G*) flowing in the return line (226')

8. The system (1) according to claim 7, when dependent on claim 5 or 6, wherein the system (1) further comprises
- an automatic controller (500) in signal communication with the flow sensor (227'), the controller (500) being configured to automatically control the exhaust off-gas control valve (227) based on the flow rate (*R_{G}*) measured by the flow sensor (227").

9. The system (1) according to any one of the preceding claims, wherein
the regenerator power source system (220) further comprises
- a heat exchanger (224) configured to transfer heat from the exhaust off-gas (*G*) to the internal volume of the regenerator vessel (201),
- wherein the return line (226,226') is configured to transport the portion of the cooled exhaust off-gas (G) from the heat exchanger (224) and
- wherein the heat exchanger (224) is configured such that a heat exchanger exit temperature (*Tₕₑ*) of the exhaust off-gas (*G*) leaving the heat exchanger (224) is less than 90 % of a heat exchanger inlet temperature (*Tₕᵢ*) entering the heat exchanger (224).

10. The system (1) according to any one of the preceding claims, wherein the system (1) further comprises
- a second return line (226,226") for transporting a portion of the exhaust off-gas (*G*) from the internal volume of the regenerator reactor vessel (201) to an off-gas treatment system (600).

11. The system (1) according to any one of the preceding claims, wherein the system (1) further comprises
- a second fuel material line (228) for transporting a portion of the feed material (*B*) into the gas burner (221).

12. The system (1) according to any one of the preceding claims, wherein the gas burner (221) is configured such that, when gas entering the gas burner (221) have a temperature of less than 100°C, the temperature of the exhaust off-gas (*G*) ejected from the burner outlet (223) is more than 900°C.

13. The system (1) according to any one of the preceding claims, wherein the system (1) further comprises:
- a separator (300) configured to separate the used sorbent (*A**) from the hydrogen gas (*H₂*) ejected from the reformer reactor (100), the separator (300) comprising
∘ a separator inlet (304) for feeding the hydrogen gas (*H₂*) and the used sorbent (*A**) into the separator (300) and
∘ a separator outlet (305) for ejecting the separated used sorbent (*A**),
- a separator transport line (150) for transporting the used sorbent (*A**) and the hydrogen gas (*H₂*) from the reformer outlet (155) to the separator inlet (304) and
- a regenerator transport line (320) for transporting the flow of the used sorbent (*A**) from the separator outlet (305) to the regenerator inlet (205).

14. A method for producing hydrogen gas (*H₂*) using the system according to claims 1-13, the method comprising the steps of:
A. introducing the feed material (*B*) and the steam (*C*) into the reformer reactor (100), wherein the reformer reactor (100) is containing carbon dioxide capturing sorbent (*A*),
B. reforming the feed material (*B*) and the steam (*C*) within the reformer reactor (100) for producing the reformate gas mixture and the used sorbent (*A**),
C. transporting at least a portion of the used sorbent (*A**) and at least a portion of the reformate gas mixture from the reformer reactor (100) to the regenerator reactor (200),
D. introducing the first burner gas (*E*) into the gas burner (221) at a burner inlet temperature (*T_{bi}*), wherein the gas burner (221) is configured to allow the first burner gas (E) to produce an exhaust off-gas (*G*) at a burner outlet temperature (*T_{bo}*) higher than the burner inlet temperature (*T_{bj}*)*,*
E. transporting the exhaust off-gas (*G*) from the gas burner (221) to the internal volume of the regenerator reactor vessel (201), wherein the gas burner (221) is configured such that the heat causes the used sorbent (*A**) within the regenerator vessel (201) to release at least a portion of the carbon dioxide (*CO₂*) to at least partly regenerate the carbon dioxide capturing sorbent (*A*) of step A,
G. transporting at least a portion (*R_{G}*) of the flow of the exhaust gas (*G*) leaving the internal volume of the regenerator reactor vessel (201) to the gas burner (221) to cool the exhaust off-gas (*G*) from the burner outlet temperature (*T_{bo}*) to a regenerator inlet temperature (*Tₕᵢ*) and
H. transporting the carbon dioxide capturing sorbent (*A*) regenerated at step F from the regenerator reactor (200) to the reformer reactor (100).

15. The method according to claim 14, wherein the method further comprises the steps of
- monitoring a flow rate (*R*_{*A**}) of the used sorbent (*A**) flowing into the regenerator inlet (205) and,
- if the variation in the flow rate (*R*_{*A**}) exceeds a predetermined flow rate threshold, regulating a flow rate of the exhaust off-gas (*G*) flowing into and/or out of the internal volume of the regenerator reactor vessel (201) by use of an automatic controller (500) in signal communication with the regenerator power source (220) to ensure that the burner outlet temperature (*T_{bo}*) is maintained within a predetermined temperature threshold during operation.

## Patentansprüche

1. System (1) zum Erzeugen von Wasserstoffgas, wobei das System (1) Folgendes umfasst:
- einen Reformerreaktor (100) zum Fassen eines Sorptionsmittels (A), das Kohlendioxid bindet,
∘ wobei der Reformerreaktor (100) dazu ausgelegt ist, ein Reformieren eines Zuführmaterials (B) und eines Dampfes (C) zu ermöglichen, um ein Reformatgasgemisch zu erzeugen, das ein Wasserstoffgas (H₂) und ein Kohlendioxidgas (CO₂) umfasst,
∘ wobei der Reformerreaktor (100) einen Reformereinlass (130) zum Zuführen von mindestens einem des Zuführmaterials (B) und des Dampfes (C) in den Reformerreaktor (100) und einen Reformerauslass (155) zum Ausstoßen des Wasserstoffgases (H₂) und eines gebrauchten Sorptionsmittels (A*), das innerhalb des Reformerreaktors (100) erzeugt wird, umfasst, wobei das gebrauchte Sorptionsmittel (A*) als das Produkt definiert ist, das aus einer Reaktion zwischen dem Sorptionsmittel (A) und dem Kohlendioxid (CO₂) resultiert,
- einen Regeneratorreaktor (200), umfassend
∘ einen Regeneratorbehälter (201),
∘ einen Regeneratoreinlass (205) zum Aufnehmen mindestens eines Teils des gebrauchten Sorptionsmittels (A*),
∘ ein Regeneratorenergiequellensystem (220), das dazu ausgelegt ist, dem aufgenommenen gebrauchten Sorptionsmittel (A*) genügend Wärme bereitzustellen, um die Freisetzung von Kohlendioxid (CO₂) aus dem gebrauchten Sorptionsmittel (A*) zu ermöglichen und das Sorptionsmittel (A), das Kohlendioxid bindet, zu regenerieren, und
∘ einen Regeneratorauslass (215) zum Ausstoßen des regenerierten Sorptionsmittels (A),
- eine Regeneratortransportleitung (150, 320) zum Transportieren des gebrauchten Sorptionsmittels (A*) von dem Reformerauslass (155) zu dem Regeneratoreinlass (205) und
- eine Recyclingleitung (210) zum Transportieren mindestens eines Teils des regenerierten Sorptionsmittels (A) von dem Regeneratorauslass (215) in den Reformerreaktor (100), wobei das Regeneratorenergiequellensystem (220) Folgendes umfasst:
- einen Gasbrenner (221), umfassend
o einen ersten Brennereinlass (222) zum Zuführen eines ersten Brennergases (E) in den Brenner (221),
∘ einen Brennerauslass (223) zum Ausstoßen eines im Inneren des Gasbrenners (221) erzeugten Abgases (G) und
∘ eine Brennertransportleitung (225) zum Transportieren des Abgases (G) von dem Brennerauslass (223) zu einem Innenvolumen des Regeneratorreaktorbehälters (201) und
- eine Rücklaufleitung (226, 226') zum Transportieren mindestens eines Teils des gekühlten Abgases (G) aus dem Innenvolumen des Regeneratorreaktorbehälters (201) in mindestens eines des Gasbrenners (221) und der Brennertransportleitung (225).

2. System (1) nach Anspruch 1, wobei das Regeneratorenergiequellensystem (220) ferner Folgendes umfasst:
- einen Wärmetauscher (224), der dazu ausgelegt ist, Wärme von dem Abgas (G) auf das Innenvolumen des Regeneratorbehälters (201) zu übertragen, und
- wobei die Rücklaufleitung (226, 226') dazu ausgelegt ist, den Teil des gekühlten Abgases (G) von dem Wärmetauscher (224) zu transportieren.

3. System (1) nach Anspruch 1 oder 2, wobei der Gasbrenner (221) ferner Folgendes umfasst:
- - einen zweiten Brennereinlass (222') zum Zuführen eines zweiten Brennergases (F) in den Brenner (221).

4. System (1) nach einem der vorhergehenden Ansprüche, wobei das System (1) ferner eine automatische Steuerung (500), die in Signalverbindung mit der Regeneratorenergiequelle (220) steht, umfasst, wobei die Steuerung (500) dazu ausgelegt ist, einen Betrieb des Regeneratorenergiesystems (220) auf der Grundlage von mindestens einem von Folgenden automatisch zu steuern:
- einer Durchflussmenge des ersten Brennergases (E) in den Brenner (221),
- einer Durchflussmenge des Zuführmaterials (B), das in den Reformerreaktor (100) strömt,
- einer Durchflussmenge von Dampf (C), der in den Reformerreaktor (100) strömt,
- einer Durchflussmenge eines Gemischs aus Zuführmaterial (B) und Dampf (C), das in den Reformerreaktor (100) strömt,
- einer Durchflussmenge des gebrauchten Sorptionsmittels (A*), das in den Regeneratorbehälter (201) strömt,
- einer Temperatur innerhalb des Regeneratorbehälters (201),
- einer Temperatur des Abgases (G), das in den Regeneratorbehälter (201) und/oder aus dem Regeneratorbehälter (201) strömt, und
- einer Durchflussmenge des Abgases (G) in den Regeneratorbehälter (201) und/oder aus dem Regeneratorbehälter (201).

5. System (1) nach einem der vorhergehenden Ansprüche, wobei die Rücklaufleitung (226') Folgendes umfasst:
- ein Abgassteuerventil (227), das dazu ausgelegt ist, eine Durchflussmenge (R_{G}) des Abgases (G), das in die Rücklaufleitung (226') strömt, zu regulieren.

6. System (1) nach Anspruch 5, wobei das Abgassteuerventil (227) Folgendes umfasst:
- eine Steuerventilsteuerung (227'), die dazu ausgelegt ist, die Durchflussmenge (R_{G}) des Abgases (G) zu steuern.

7. System (1) nach einem der vorhergehenden Ansprüche, wobei die Rücklaufleitung (226') Folgendes umfasst:
- einen Durchflusssensor (227"), der dazu ausgelegt ist, eine Durchflussmenge (R_{G}) des Abgases (G), das in die Rücklaufleitung (226') strömt, zu messen.

8. System (1) nach Anspruch 7, in Abhängigkeit von Anspruch 5 oder 6, wobei das System (1) ferner Folgendes umfasst:
- eine automatische Steuerung (500), die in Signalverbindung mit dem Durchflusssensor (227') steht, wobei die Steuerung (500) dazu ausgelegt ist, das Abgassteuerventil (227) auf der Grundlage der Durchflussmenge (R_{G}), die von dem Durchflusssensor (227") gemessen wird, automatisch zu steuern.

9. System (1) nach einem der vorhergehenden Ansprüche, wobei das Regeneratorenergiequellensystem (220) ferner Folgendes umfasst:
- einen Wärmetauscher (224), der dazu ausgelegt ist, Wärme vom Abgas (G) auf das Innenvolumen des Regeneratorbehälters (201) zu übertragen,
- wobei die Rücklaufleitung (226, 226') dazu ausgelegt ist, den Teil des gekühlten Abgases (G) von dem Wärmetauscher (224) zu transportieren, und
- wobei der Wärmetauscher (224) derart ausgelegt ist, dass eine Wärmetauscheraustrittstemperatur (Tₕₑ) des Abgases (G), das aus dem Wärmetauscher (224) austritt, weniger als 90 % einer Wärmetauschereinlasstemperatur (Tₕᵢ) beim Eintritt in den Wärmetauscher (224) beträgt.

10. System (1) nach einem der vorhergehenden Ansprüche, wobei das System (1) ferner Folgendes umfasst:
- eine zweite Rücklaufleitung (226, 226") zum Transportieren eines Teils des Abgases (G) aus dem Innenvolumen des Regeneratorreaktorbehälters (201) zu einem Abgasbehandlungssystem (600).

11. System (1) nach einem der vorhergehenden Ansprüche, wobei das System (1) ferner Folgendes umfasst:
- eine zweite Brennstoffmaterialleitung (228) zum Transportieren eines Teils des Zuführmaterials (B) in den Gasbrenner (221).

12. System (1) nach einem der vorhergehenden Ansprüche, wobei der Gasbrenner (221) derart ausgelegt ist, dass, wenn Gas, das in den Gasbrenner (221) eintritt, eine Temperatur von weniger als 100 °C aufweist, die Temperatur des Abgases (G), das aus dem Brennerauslass (223) ausgestoßen wird, mehr als 900 °C beträgt.

13. System (1) nach einem der vorhergehenden Ansprüche, wobei das System (1) ferner Folgendes umfasst:
- einen Separator (300), der dazu ausgelegt ist, das gebrauchte Sorptionsmittel (A*) von dem Wasserstoffgas (H₂) zu trennen, das aus dem Reformerreaktor (100) ausgestoßen wird, wobei der Separator (300) Folgendes umfasst:
∘ einen Separatoreinlass (304) zum Zuführen des Wasserstoffgases (H₂) und des gebrauchten Sorptionsmittels (A*) in den Separator (300) und
∘ einen Separatorauslass (305) zum Ausstoßen des abgetrennten gebrauchten Sorptionsmittels (A*),
- eine Separatortransportleitung (150) zum Transportieren des gebrauchten Sorptionsmittels (A*) und des Wasserstoffgases (H₂) von dem Reformerauslass (155) zu dem Separatoreinlass (304) und
- eine Regeneratortransportleitung (320) zum Transportieren des Stroms des gebrauchten Sorptionsmittels (A*) von dem Separatorauslass (305) zu dem Regeneratoreinlass (205).

14. Verfahren zum Herstellen von Wasserstoffgas (H₂) unter Verwendung des Systems nach den Ansprüchen 1-13, wobei das Verfahren die folgenden Schritte umfasst:
A. Einleiten des Zuführmaterials (B) und des Dampfes (C) in den Reformerreaktor (100), wobei der Reformerreaktor (100) ein Sorptionsmittel (A), das Kohlendioxid bindet, enthält,
B. Reformieren des Zuführmaterials (B) und des Dampfes (C) innerhalb des Reformerreaktors (100) zum Herstellen des Reformatgasgemisches und des gebrauchten Sorptionsmittels (A*),
C. Transportieren mindestens eines Teils des gebrauchten Sorptionsmittels (A*) und mindestens eines Teils des Reformatgasgemisches aus dem Reformerreaktor (100) zu dem Regeneratorreaktor (200),
D. Einleiten des ersten Brennergases (E) in den Gasbrenner (221) bei einer Brennereinlasstemperatur (T_{bi}), wobei der Gasbrenner (221) dazu ausgelegt ist, zu ermöglichen, dass das erste Brennergas (E) ein Abgas (G) bei einer Brennerauslasstemperatur (T_{bo}) herstellt, die höher als die Brennereinlasstemperatur (T_{bj}) ist,
E. Transportieren des Abgases (G) von dem Gasbrenner (221) zu dem Innenvolumen des Regeneratorreaktorbehälters (201), wobei der Gasbrenner (221) derart ausgestaltet ist, dass die Wärme bewirkt, dass das gebrauchte Sorptionsmittel (A*) innerhalb des Regeneratorbehälters (201) mindestens einen Teil des Kohlendioxids (CO₂) freisetzt, um das Sorptionsmittel (A) aus Schritt A, das Kohlendioxid bindet, zumindest teilweise zu regenerieren,
G. Transportieren mindestens eines Teils (R_{G}) des Stroms von Abgas (G), der aus dem Innenvolumen des Regeneratorreaktorbehälters (201) austritt, zu dem Gasbrenner (221), um das Abgas (G) von der Brennerauslasstemperatur (T_{bo}) auf eine Regeneratoreinlasstemperatur (Tₕᵢ) zu kühlen und
H. Transportieren des in Schritt F regenerierten Sorptionsmittels (A), das Kohlendioxid bindet, aus dem Regeneratorreaktor (200) zu dem Reformerreaktor (100).

15. Verfahren nach Anspruch 14, wobei das Verfahren ferner die folgenden Schritte umfasst:
- Überwachen einer Durchflussmenge (R_{A}*) des gebrauchten Sorptionsmittels (A*), das in den Regeneratoreinlass (205) strömt, und
- wenn die Änderung der Durchflussmenge (R_{A}*) einen vorbestimmten Durchflussmengenschwellenwert überschreitet, Regulieren einer Durchflussmenge des Abgases (G), das in das und/oder aus dem Innenvolumen des Regeneratorreaktorbehälters (201) strömt, mittels einer automatischen Steuerung (500), die in Signalverbindung mit der Regeneratorenergiequelle (220) steht, um sicherzustellen, dass die Brennerauslasstemperatur (T_{bo}) während des Betriebs innerhalb eines vorbestimmten Temperaturschwellenwerts gehalten wird.

## Revendications

1. Système (1) de production d'hydrogène gazeux, le système (1) comprenant :
- un réacteur reformeur (100) pour contenir un sorbant (A) de capture de dioxyde de carbone,
∘ dans lequel le réacteur reformeur (100) est configuré pour permettre le reformage d'un matériau d'alimentation (B) et d'une vapeur (C) pour produire un mélange gazeux de reformat comprenant un hydrogène gazeux (*H₂*) et un dioxyde de carbone gazeux (*CO₂*),
∘ dans lequel le réacteur reformeur (100) comprend une entrée de reformeur (130) pour introduire au moins l'un parmi le matériau d'alimentation (*B*) et la vapeur (*C*) dans le réacteur reformeur (100) et une sortie de reformeur (155) pour éjecter l'hydrogène gazeux (*H₂*) et un sorbant (*A**) usé produits dans le réacteur reformeur (100), le sorbant (*A**) usé étant défini comme le produit résultant d'une réaction entre le sorbant (*A*) et le dioxyde de carbone (*CO₂*),
- un réacteur régénérateur (200) comprenant
∘ une cuve de régénérateur (201),
∘ une entrée de régénérateur (205) pour recevoir au moins une partie du sorbant (*A**) usé,
∘ un système de source d'énergie de régénérateur (220) configuré pour fournir suffisamment de chaleur au sorbant (*A**) usé reçu pour permettre la libération du dioxyde de carbone (*CO₂*) à partir du sorbant (*A**) usé et pour régénérer le sorbant (*A*) de capture de dioxyde de carbone, et
∘ une sortie de régénérateur (215) pour éjecter le sorbant (*A*) régénéré,
- une conduite de transport de régénérateur (150, 320) pour transporter le sorbant (*A**) usé depuis la sortie de reformeur (155) jusqu'à l'entrée de régénérateur (205) et
- une conduite de recyclage (210) pour transporter au moins une partie du sorbant (*A*) régénéré depuis la sortie de régénérateur (215) jusqu'au réacteur reformeur (100), dans lequel le système de source d'énergie de régénérateur (220) comprend
- un brûleur à gaz (221) comprenant
∘ une première entrée de brûleur (222) pour introduire un premier gaz de brûleur (E) dans le brûleur (221),
∘ une sortie de brûleur (223) pour éjecter un gaz d'échappement (*G*) produit à l'intérieur du brûleur à gaz (221) et
∘ une conduite de transport de brûleur (225) pour transporter le gaz d'échappement (*G*) depuis la sortie de brûleur (223) jusqu'à un volume interne de la cuve de réacteur régénérateur (201), et
- une conduite de retour (226, 226') pour transporter au moins une partie du gaz d'échappement (*G*) refroidi depuis le volume interne de la cuve de réacteur régénérateur (201) dans au moins l'un parmi le brûleur à gaz (221) et la conduite de transport de brûleur (225).

2. Système (1) selon la revendication 1, dans lequel le système de source d'énergie de régénérateur (220) comprend en outre
- un échangeur de chaleur (224) configuré pour transférer de la chaleur depuis le gaz d'échappement (G) jusqu'au volume interne de la cuve de régénérateur (201) et
- dans lequel la conduite de retour (226, 226') est configurée pour transporter la partie du gaz d'échappement (*G*) refroidi à partir de l'échangeur de chaleur (224).

3. Système (1) selon la revendication 1 ou 2, dans lequel le brûleur à gaz (221) comprend en outre
- une deuxième entrée de brûleur (222') pour introduire un deuxième gaz de brûleur (*F*) dans le brûleur (221).

4. Système (1) selon l'une quelconque des revendications précédentes, dans lequel le système (1) comprend en outre un dispositif de commande automatique (500) en communication de signal avec la source d'énergie de régénérateur (220), le dispositif de commande (500) étant configuré pour commander automatiquement le fonctionnement du système d'énergie de régénérateur (220) sur la base d'au moins l'un parmi :
- un débit du premier gaz de brûleur (*E*) dans le brûleur (221),
- un débit du matériau d'alimentation (*B*) s'écoulant dans le réacteur reformeur (100),
- un débit de vapeur (*G*) s'écoulant dans le réacteur reformeur (100),
- un débit d'un mélange de matériau d'alimentation (*B*) et de vapeur (*C*) s'écoulant dans le réacteur reformeur (100),
- un débit du sorbant (*A**) usé s'écoulant dans la cuve de régénérateur (201),
- une température à l'intérieur de la cuve de régénérateur (201),
- une température de gaz d'échappement (*G*) s'écoulant dans la cuve de régénérateur (201) et/ou hors de la cuve de régénérateur (201) et
- un débit de gaz d'échappement (*G*) dans la cuve de régénérateur (201) et/ou sortant de la cuve de régénérateur (201).

5. Système (1) selon l'une quelconque des revendications précédentes, dans lequel la conduite de retour (226') comprend
- une vanne de régulation de gaz d'échappement (227) configurée pour réguler un débit (*R_{G}*) du gaz d'échappement (*G*) s'écoulant dans la conduite de retour (226').

6. Système (1) selon la revendication 5, dans lequel la vanne de régulation de gaz d'échappement (227) comprend
- un dispositif de commande de vanne de régulation (227') configuré pour réguler le débit (*R_{G}*) du gaz d'échappement (*G*).

7. Système (1) selon l'une quelconque des revendications précédentes, dans lequel la conduite de retour (226') comprend
- un capteur de débit (227") configuré pour mesurer un débit (*R_{G}*) du gaz d'échappement (*G*) s'écoulant dans la conduite de retour (226').

8. Système (1) selon la revendication 7, lorsqu'elle dépend de la revendication 5 ou 6, dans lequel le système (1) comprend en outre
- un dispositif de commande automatique (500) en communication de signal avec le capteur de débit (227'), le dispositif de commande (500) étant configuré pour commander automatiquement la vanne de régulation de gaz d'échappement (227) sur la base du débit (*R_{G}*) mesuré par le capteur de débit (227").

9. Système (1) selon l'une quelconque des revendications précédentes, dans lequel le système de source d'énergie de régénérateur (220) comprend en outre
- un échangeur de chaleur (224) configuré pour transférer de la chaleur depuis le gaz d'échappement (*G*) jusqu'au volume interne de la cuve de régénérateur (201),
- dans lequel la conduite de retour (226, 226') est configurée pour transporter la partie du gaz d'échappement (*G*) refroidi à partir de l'échangeur de chaleur (224) et
- dans lequel l'échangeur de chaleur (224) est configuré de telle sorte qu'une température de sortie d'échangeur de chaleur (*Tₕₑ*) du gaz d'échappement (*G*) sortant de l'échangeur de chaleur (224) est inférieure à 90 % d'une température d'entrée d'échangeur de chaleur (*Tₕᵢ*) entrant dans l'échangeur de chaleur (224).

10. Système (1) selon l'une quelconque des revendications précédentes, dans lequel le système (1) comprend en outre
- une deuxième conduite de retour (226, 226") pour transporter une partie du gaz d'échappement (*G*) depuis le volume interne de la cuve de réacteur régénérateur (201) jusqu'à un système de traitement de gaz d'échappement (600).

11. Système (1) selon l'une quelconque des revendications précédentes, dans lequel le système (1) comprend en outre
- une deuxième conduite de matériau combustible (228) pour transporter une partie du matériau d'alimentation (B) dans le brûleur à gaz (221).

12. Système (1) selon l'une quelconque des revendications précédentes, dans lequel le brûleur à gaz (221) est configuré de telle sorte que, lorsque le gaz entrant dans le brûleur à gaz (221) présente une température inférieure à 100 °C, la température du gaz d'échappement (*G*) éjecté à partir de la sortie de brûleur (223) est supérieure à 900 °C.

13. Système (1) selon l'une quelconque des revendications précédentes, dans lequel le système (1) comprend en outre :
- un séparateur (300) configuré pour séparer le sorbant (A*) usé à partir de l'hydrogène gazeux (*H₂*) éjecté du réacteur reformeur (100), le séparateur (300) comprenant
∘ une entrée de séparateur (304) pour introduire l'hydrogène gazeux (*H₂*) et le sorbant (*A**) usé dans le séparateur (300) et
∘ une sortie de séparateur (305) pour éjecter le sorbant (*A**) usé séparé,
- une conduite de transport de séparateur (150) pour transporter le sorbant (*A**) usé et l'hydrogène gazeux (*H₂*) depuis la sortie de reformeur (155) jusqu'à l'entrée de séparateur (304) et
- une conduite de transport de régénérateur (320) pour transporter le flux du sorbant (*A**) usé depuis la sortie de séparateur (305) jusqu'à l'entrée de régénérateur (205).

14. Procédé de production d'hydrogène gazeux (*H₂*) utilisant le système selon les revendications 1 à 13, le procédé comprenant les étapes consistant à :
A. introduire le matériau d'alimentation (*B*) et la vapeur (*C*) dans le réacteur reformeur (100), dans lequel le réacteur reformeur (100) contient un sorbant (*A*) de capture de dioxyde de carbone,
B. reformer le matériau d'alimentation (*B*) et la vapeur (*C*) à l'intérieur du réacteur reformeur (100) pour produire le mélange gazeux de reformat et le sorbant (*A**) usé,
C. transporter au moins une partie du sorbant (*A**) usé et au moins une partie du mélange gazeux de reformat depuis le réacteur reformeur (100) jusqu'au réacteur régénérateur (200),
D. introduire le premier gaz de brûleur (*E*) dans le brûleur à gaz (221) à une température d'entrée de brûleur (*T_{bi}*), dans lequel le brûleur à gaz (221) est configuré pour permettre au premier gaz de brûleur (*E*) de produire un gaz d'échappement (*G*) à une température de sortie de brûleur (*T_{bo}*) supérieure à la température d'entrée de brûleur (*T_{bj}*),
E. transporter le gaz d'échappement (*G*) depuis le brûleur à gaz (221) jusqu'au volume interne de la cuve de réacteur régénérateur (201), dans lequel le brûleur à gaz (221) est configuré de telle sorte que la chaleur amène le sorbant (*A**) usé à l'intérieur de la cuve de régénérateur (201) à libérer au moins une partie du dioxyde de carbone (*CO₂*) afin de régénérer au moins partiellement le sorbant (*A*) de capture de dioxyde de carbone de l'étape A,
G. transporter au moins une partie (*R_{G}*) du flux de gaz d'échappement (*G*) sortant du volume interne de la cuve de réacteur régénérateur (201) vers le brûleur à gaz (221) pour refroidir le gaz d'échappement (*G*) de la température de sortie de brûleur (*T_{bo}*) à une température d'entrée de régénérateur (*Tₕᵢ*) et
H. transporter le sorbant (*A*) de capture de dioxyde de carbone régénéré dans l'étape F depuis le réacteur régénérateur (200) jusqu'au réacteur reformeur (100).

15. Procédé selon la revendication 14, dans lequel le procédé comprend en outre les étapes consistant à :
- surveiller un débit (*R_{A*}*) du sorbant (*A**) usé s'écoulant dans l'entrée de régénérateur (205) et,
- si la variation du débit (*R_{A*}*) dépasse un seuil de débit prédéterminé, réguler un débit du gaz d'échappement (*G*) s'écoulant dans et/ou hors du volume interne de la cuve de réacteur régénérateur (201) en utilisant un dispositif de commande automatique (500) en communication de signal avec la source d'énergie de régénérateur (220) pour garantir que la température de sortie de brûleur (*T_{bo}*) est maintenue dans un seuil de température prédéterminé pendant le fonctionnement.
